# EUROPÄISCHE PATENTSCHRIFT

(11) **EP 2 245 424 B1**
(45) Veröffentlichungstag und Bekanntmachung des Hinweises auf die Patenterteilung: **25.07.2012**
(21) Anmeldenummer: 09711674.3
(22) Anmeldetag: 16.02.2009
(51) Int. Cl.: G01B 11/25

(54) **MESSSTATION FÜR HOCHGLÄNZENDE FLÄCHEN**
MEASURING STATION FOR HIGH-GLOSS SURFACES
POSTE DE MESURE POUR DES SURFACES TRÈS BRILLANTES

(30) Priorität: 18.02.2008 DE 102008009757
(43) Veröffentlichungstag der Anmeldung: 03.11.2010
(73) Patentinhaber: Rattunde & Co GmbH, 19288 Ludwigslust (DE)
(72) Erfinder: RATTUNDE, Ulrich, 19322 Bentwisch (DE)
(74) Vertreter: Groth, Wieland
(86) Internationale Anmeldenummer: PCT/DE2009/000210
(87) Internationale Veröffentlichungsnummer: WO 2009/103272

(56) Entgegenhaltungen:
- WO-A-2007/056974
- DE-A1- 10 108 221
- DE-A1-102004 025 490

## Beschreibung

Die Erfindung betrifft ein Messverfahren für ein Profil einer reflektierenden Fläche eines Werkstücks, insbesondere einer reflektierenden Fläche eines Rohrabschnittsendes sowie eine Messvorrichtung zur Durchführung des Messverfahrens.

Messstationen und Messverfahren zur Bestimmung des Profils eines gerade abgelängten Rohrabschnittsendes sind als Bauteile integrierter Rohrsägeanlagen zur Durchführung einer Endkontrolle, der Länge, des Fasenwinkels usw. bekannt. Bei modernen, integrierten Rohrsägeanlagen findet eine integrierte Nachbehandlung des abgelängten Rohrabschnitts in Form von Entgraten, Anfasen und Waschen der Rohrenden statt. Insbesondere zur nachträglichen Kontrolle der Fasenwinkel, der Wandungsstärke und des Innen- und Außendurchmessers des abgelängten Rohrabschnittendes, des Planlaufes und des Stirnschlags ist es bei einer Hochpräzisionsbearbeitung von Rohren notwendig, die Rohrenden einzeln nach dem Ablängvorgang zu prüfen. Messstationen zur Prüfung der genannten Parameter sind im Stand der Technik grundsätzlich bekannt.

Aus der WO 2007 056 974 1 ist ein Verfahren zur optischen Messung metallischer Oberflächen bekannt. Dabei wird ein Titandioxid enthaltender Werkstoff zur Ausbildung einer Weißpigmentierung auf die Oberfläche aufgebracht und diese mittels einer Kamera vermessen. Das Verfahren setzt nachteiligerweise Trockungszeiten des aufgesprühten Titandioxids sowie eine relativ lange Taktung voraus.

Aus der DE 10 2004 025490 A1 ist ebenfalls ein Verfahren zum optischen Vermessen reflektierender Objekte mittels Lasermesstechnik bekannt, wobei auf eine hochreflektierende Fläche ein Kondensatfilm aufgebacht wird, der das Reflextionsverhalten vermindert. Dieses Verfahren ist relativ zeitaufwendig bis sich auf der Oberfläche ein Kondensat niedergeschlagen hat

Die DE 101 08 221 A1 betrifft ein Verfahren zur Erfassung einer Abdeckscheibe eines Scheinwerfers eines Kraftfahrzeuges. Dabei fahren Fahrzeugkarosserien getaktet an der Messeinrichtung vorbei. Auch dieses Verfahren ist relativ zeitaufwendig.

Beispielsweise ist aus der DE 10 2005 043 223 A1 eine Messstation für eine Rohrschneidemaschine bekannt, bei der die genannten Parameter eines abgelängten Rohrendes mittels zweier zusammenwirkender Lasersensoren bestimmt werden.

Als nachteilig an der genannten Messstation hat sich gezeigt, dass direkt nach dem Ablängen eines metallischen Rohrabschnittes die bearbeiteten Metallflächen hochglänzend sind und damit den auftretenden zur Vermessung benötigten Laserstrahl fast vollständig genau im Ausfallswinkel reflektieren. Es bildet sich also nur relativ wenig Streulicht, das auf den normalerweise nicht gerade im Ausfallswinkel angeordneten Sensor fallen kann. Das Streulicht ist zur Messung notwendig, um einen Vergleich zwischen einfallendem und reflektiertem Laserstrahl zu ermöglichen.

Es ist daher Aufgabe der Erfindung, ein Messverfahren für das Profil einer reflektierenden Fläche eines Werkstückes sowie eine Messvorrichtung zur Durchführung des Messverfahrens zu verbessern.

In ihrem ersten Aspekt wird die Aufgabe durch ein Verfahren mit den Merkmalen des Anspruchs 1 gelöst.

Erfindungsgemäß wird die hochgradig reflektierende Fläche mattiert, indem in der Umgebungsluft befindliche Schwebepartikel auf der reflektierenden Fläche abgelagert werden. Bei den Schwebepartikeln kann es sich um ohnehin in der Umgebungsluft befindliche Staubpartikel, aber auch um durch eine Zufuhreinrichtung zusätzlich zugeführte Schwebepartikel handeln. Schwebepartikel können zusätzlich in Form von Rauch dem Bereich der reflektierenden Fläche zugeführt werden. Damit sich die Schwebepartikel zügig auf der reflektierenden, glänzenden Fläche ablagern, wird ein elektrisches Feld zwischen dem in der Umgebungsluft der reflektierenden Fläche schwebenden Partikeln und der reflektierenden Fläche erzeugt.

Vorzugsweise werden die Schwebepartikel mittels eines elektrostatischen Filters oder einer elektrostatischen Spritzpistole elektrostatisch aufgeladen. Alternativ oder zusätzlich kann auch die reflektierende Fläche elektrostatisch geladen werden.

Das Phänomen, dass elektrostatisch aufgeladenen Flächen sie umgebene Staubpartikel anziehen, ist aus dem Alltagsleben bekannt. Beispielsweise zieht die elektrisch geladene Femsehmattscheibe Staub an oder durch Reibung aufgeladene glatte Glastische ziehen Umgebungsstaub an.

Die Erfindung macht von der Tatsache Gebrauch, dass Schwebepartikel zum Beispiel in Form von ohnehin vorhandenen Staubpartikeln durch das künstlich erzeugte elektrostatische Feld zügig zu der reflektierenden Fläche angezogen werden, sich dort ablagern und die an sich hochglänzende Fläche auf diese Weise mattieren.

Bei den reflektierenden Flächen kann es sich um bearbeitete Flächen eines Werkstückes handeln, beispielsweise um die durch eine Rohrsägemaschine erzeugte, reflektierende Schnittfläche eines Rohrabschnittsendes, das gerade von einem länglichen Metallrohr abgelängt wurde. Kurz nach dem Absägen des Rohrabschnittes von dem langen Metallrohr sind die bearbeiteten Metallflächen hochglänzend und ein auf sie treffender Laserstrahl wird fast vollständig im Ausfallswinkel reflektiert. Es entsteht nur in geringem Maße Streulicht. Deshalb ist zumindest zunächst eine hinreichend zügige und genaue Messung mittels eines nicht nachgeführten oder positionsfesten oder eines gegenüber dem Laser relativ positionsstabilen Sensors, der auf das Streulicht angewiesen ist, nur unzureichend möglich. Das Verfahren eignet sich aber grundsätzlich zur Vermessung beliebiger reflektierender Flächen. Erfindungsgemäß wird die reflektierende, hochglänzende Fläche durch von dem elektrostatischen Feld angezogene Partikel in Sekundenbruchteilen mit einer ganz dünnen Partikelschicht überdeckt und so mattiert. Die mattierte Fläche erzeugt deutlich mehr Streulicht als die hochglänzende Fläche. Das nach dem Auftreffen des Laserstrahls gebildete Streulicht streut auch in den Sensor und ermöglicht eine Profilmessung durch Vergleich des ausgesendeten und zurück gestreuten Laserstrahls. Mit dem bloßen Auge ist kein Unterschied zwischen der hochglänzenden Fläche und der mit der dünnen Staubschicht bedeckten Fläche zu erkennen.

Damit ständig hinreichend viele Schwebepartikel in der Umgebungsluft der reflektierenden Fläche vorhanden sind, kann eine Schwebepartikelzufuhr, beispielsweise in Form einer Rauchzufuhr, vorgesehen sein. Die Rauchzufuhr kann eine elektrostatische Spritzpistole umfassen.

Das erfindungsgemäße Messverfahren eignet sich insbesondere zur zügigen Kontrolle abgelängter Rohrabschnitte eines Metallrohres. Das Verfahren ist für verschiedene Arten von Werkstücken anwendbar. Nach dem Ablängen kann das Metallrohr noch weiteren Bearbeitungsschritten unterworfen werden, wie Anfasen, Waschen, Bürsten usw. Der abgelängte Rohrabschnitt, insbesondere Metallrohrabschnitt, wird dann in einer Aufnahme einer erfindungsgemäßen Messvorrichtung aufgenommen, dort mittels des erfindungsgemäßen Messverfahrens vermessen und nach der Profilmessung aus der Messvorrichtung entfernt. Wenn die Profilmessung im Toleranzbereich vorgegebener Sollwerte liegende Messwerte ergeben hat, wird das Werkstück zum Weitertransport verladen, andernfalls wird es aussortiert.

Beim Ablängen müssen Genauigkeiten von 0,1mm mit einer Wahrscheinlichkeit von 99,99 Prozent eingehalten werden. Zur Sicherung dieser Genauigkeit ist das nach dem Ablängen vorgesehene erfindungsgemäße Messverfahren bestimmt.

Üblicherweise oxidieren Metallrohre nach dem Ablängen in der Umgebungsluft automatisch. Auch durch diese Oxidation mattiert die Schnittfläche des Metallrohres. Jedoch dauert der Oxidationsvorgang, um eine hinreichende Mattierung zu erzielen, wenigstens 20 Sekunden. Erst dann kann mit herkömmlichen Lasersensoren eine hinreichend genaue Messung durchgeführt werden. Das erfindungsgemäße Verfahren erzeugt eine hinreichend mattierte Fläche jedoch innerhalb von Sekundenbruchteilen, insbesondere jedoch nach weniger als 20 Sekunden.

Dadurch kann das Messverfahren mit ausgesprochen kurzer Taktung zur Prüfung von abgelängten Rohrabschnitten verwendet werden.

In ihrem zweiten Aspekt wird die Aufgabe durch eine Vorrichtung zur Durchführung des Verfahrens gelöst mit den Merkmalen des Anspruchs 8. Die Messvorrichtung weist eine Aufnahme für ein Werkstück mit einer reflektierenden Fläche auf, deren Profil bestimmt werden soll. Bei dem Werkstück handelt es sich vorzugsweise um das abgelängte und nachbearbeitete Ende eines Metallrohres.

Wie oben beschrieben, wird mit einer Aufladevorrichtung ein elektrisches Feld zwischen in der Umgebungsluft im Bereich der in der Aufnahme aufgenommenen reflektierenden Fläche schwebenden Partikeln und der Fläche selber erzeugt.

Zweckmäßigerweise wird zum Laden der Schwebepartikel eine elektrostatische Spritzpistole verwendet.

Mittels einer an der Aufnahme angeordneten Schwebepartikelzufuhr sind hinreichende Mengen an Schwebepartikeln der Fläche zuführbar, die die oben genannte kurze Taktung sicherstellen.

Die Erfindung wird anhand eines Ausführungsbeispieles in zwei Figuren beschrieben. Dabei zeigt:
- Fig. 1: eine schematische Seitenansicht, teilweise als Schnitt der erfindungsgemäßen Messvorrichtung,
- Fig. 2: eine schematische Frontansicht der Messvorrichtung nach Fig.1.

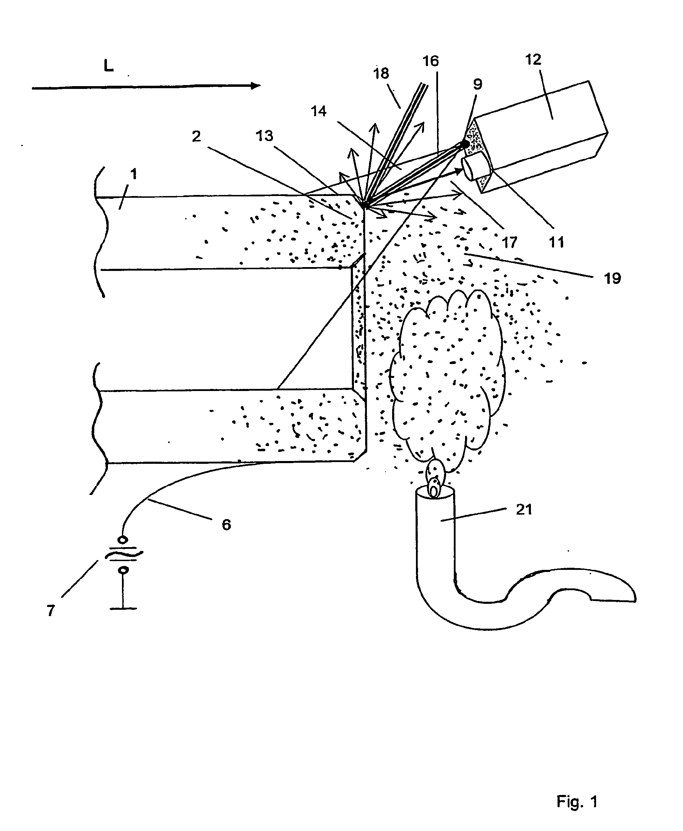

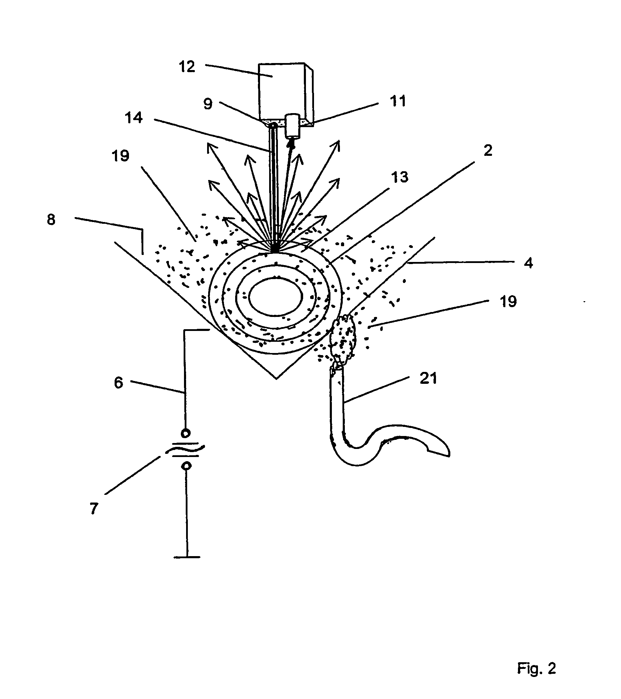

Die erfindungsgemäße Messvorrichtung ist Teil einer integrierten Rohrsägeanlage. Bei einer integrierten Rohrsägeanlage werden zunächst, von einem langen Metallrohr getaktet, einzelne Rohrabschnitte 1 abgelängt. Nach dem Ablängen werden die Rohrabschnitte 1 in nachfolgenden Schritten: angefast, gebürstet und gewaschen. Der vollständig bearbeitete Rohrabschnitt 1 muss abschließend kontrolliert werden, um den hohen Präzisionsanforderungen an die vorgegebenen Länge, den Faswinkel, die Wandungsdicke usw. gerecht werden zu können. Beispielsweise muss die Länge eines Rohrabschnitts 1 mit einer Genauigkeit von 0,1mm mit einer Wahrscheinlichkeit von 99,99 abgelängt werden, um üblichen Lieferverpflichtungen nachzukommen. Zur Kontrolle der bearbeiteten Rohrabschnittsenden 2 dient die erfindungsgemäße und in Fig. 1 und Fig. 2 dargestellte Messvorrichtung.

Die Messvorrichtung weist eine Aufnahme 4 für die abgelängten und bearbeiteten Rohrabschnitte 1 auf, die mittels eines (nicht dargestellten) Greifarmes mit den einzelnen Rohrabschnittsenden 2 getaktet bestückbar ist. In dem hier beschriebenen Ausführungsbeispiel werden die Rohrabschnittsenden 2 von Metallrohren vermessen und kontrolliert.

An der Aufnahme 4 ist ein elektrischer Kontakt 6 angeordnet, der an einem Ende mit einer elektrischen Ladungsquelle 7 verbunden ist und an einem anderen Ende leitend mit dem in die Aufnahme 4 eingelegten Rohrabschnitt 1 leitend in Verbindung steht. Wie Fig. 2 zeigt ist die Aufnahme 4 in einem Querschnitt senkrecht zur Längsrichtung L des abgelängten Rohrabschnitts 1 konisch ausgeformt und an Ihrer Innenseite mit einer Metallbeschichtung 8 belegt. Die Metallbeschichtung 8 steht mit dem elektrischen Kontakt 6 leitend in Verbindung und lädt die Metallbeschichtung 8 elektrisch auf. Der in die Aufnahme 4 eingelegte Rohrabschnitt 1 kommt beim Bestücken der Aufnahme 4 automatisch mit der Metallbeschichtung 8 in Berührung und der metallische Rohrabschnitt 1 wird durch die Berührung selber elektrisch aufgeladen.

Fig. 1 zeigt schematisch das bereits über die elektrische Ladungsquelle 7 aufgeladene Rohrabschnittsende 2.

Dem in die Aufnahme 4 eingelegten Rohrabschnitt 1 im Wesentlichen gegenüberliegend, ist ein Lasersensor 12 mit integriertem Laser 9 und mit integriertem Sensor 11 vorgesehen. Der Laser 9 und der Sensor 11 haben eine konstante Relativposition zueinander.

Der Lasersensor 12 sendet einen Laserfächer 14 aus, dessen Ebene im Wesentlichen parallel zur Längsrichtung L des abgelängten Rohrabschnitts 1 verläuft. Zur Ausbildung des Fächers 14 wird ein gebündelter Laserstrahl 16 schnell oszilliert oder der Laserstrahl 16 wird mittels einer ebenfalls im Lasersensor 12 integrierten Optik aufgefächert.

Der integrierte Sensor 11 umfasst eine CCD-Kamera. Eine Bestimmung des Profils des Rohrabschnittsendes 2 erfolgt, indem die Linienprofile 13 entlang einiger Linien in Längsrichtung L der Rohrabschnittsenden 2 bestimmt werden, und aus den einzelnen Linienprofilen 13 wird das Profil des Rohrabschnittsendes 2 berechnet.

Zur Bestimmung der einzelnen Linienprofile 13 wird das Rohrabschnittsende 2 entlang einer Linie mit dem Laserfächer 14 abgetastet und von den abgetasteten Punkten der Fläche des Rohrabschnittsendes 2 wird von ihnen reflektiertes Streulicht 17 des Laserfächers 14 vom Sensor 11 aufgenommen. Durch Bestimmung des Gangunterschiedes zwischen dem auf den abgetasteten Punkt fallenden einfallenden Laserstrahl 16 des Laserfächers 14 und dem gestreuten Strahl 17 wird das Linienprofil 13 entlang einer Linie in Längsrichtung L berechnet. Erforderlich zur Bestimmung des Linienprofils 13 ist, dass von dem angetasteten Punkt des Rohrabschnittsendes 2 Streulicht 17 in Richtung des Sensors 11 reflektiert wird.

Kurze Zeit nach dem Ablängen und Bearbeiten des Rohrabschnitts 1 glänzen die abgelängten Rohrabschnittsenden 2 extrem, d.h. die Oberflächen der Rohrabschnittsenden 2 reflektieren den einfallenden Laserstrahl 16 vollständig in den reflektierten Laserstrahl 18, vom Einfallswinkel in den Ausfallswinkel. Streulicht 17 ist so gut wie gar nicht vorhanden, oder zumindest in einem so geringen Masse, dass keine schnelle und dennoch hinreichend genaue Längenmessung vorgenommen werden kann.

Durch Oxidation der bearbeiteten Rohrabschnittsenden 2 mit dem Luftsauerstoff mattiert die reflektierende Fläche nach etwa 20 Sekunden automatisch so weit, sodass dann eine hinreichende Mattierung vorhanden ist, sodass genügend Streulicht 17 nach dem Auftreffen des einfallenden Laserstrahls 16 des Laserfächers 14 entsteht, dass vom Sensor 11 detektiert werden kann.

Der Unterschied zwischen der glänzenden und der durch Oxidation mattierten Fläche ist mit dem bloßen Auge nicht wahrzunehmen. Um die durch selbständige Oxidation vorgegebene Zeitspanne von etwa 20 Sekunden zu verkürzen, wird das Rohrabschnittsende 2 elektrisch geladen. Durch die elektrische Aufladung werden in dem Bereich um das Rohrabschnittsende 2 in der Luft schwebende Schwebepartikel 19 sofort angezogen. Durch das sich zwischen den Schwebepartikeln 19 und dem Rohrabschnittsende 2 ausbildende elektrostatische Feld werden die Schwebepartikel 19 angezogen, sie lagern sich auch auf der glänzenden Oberfläche des Rohrabschnittsendes 2 ab und mattieren diese sofort. Diese durch Ablagerung der in der Umgebung schwebenden Partikel 19 entstehende Mattierung ist hinreichend, um genügend Streulicht 17 zu erzeugen, dass eine Längenmessung mittels Laser 9 und Sensor 11 sofort ermöglicht.

Die Messung eines Rohrabschnitts 1 einschließlich Einlegen des Rohrabschnittes 1 in die Aufnahme 4 und Entfernen des vermessenen Rohrabschnittes 1 aus der Ausnahme, dauert etwa 2 Sekunden.

Im Bereich der in die Aufnahme 4 eingelegten Rohrabschnittsenden 2 ist eine Schwebepartikelzufuhr 21 als Teil der Messvorrichtung angeordnet. Die Schwebepartikelzufuhr 21 ist hier als Rauchzufuhr ausgebildet. Die in Rauch vorhandenen Staub-, Schwebe- und sonstigen Partikel werden in den Bereich der Rohrabschnittsenden 2 geblasen, und sie stellen damit die für die in der kurzen Taktung erfolgenden Messungen notwendig werdenden Mengen an Schwebepartikeln 19 zur Verfügung.

Die Menge der pro Messung zugeführten Schwebepartikel 21 wird elektronisch gesteuert. Dazu kann ein (nicht eingezeichneter) Rauchpartikeldetektor im Bereich der Aufnahme 4 vorgesehen sein, der die in dem Luftraum der Aufnahme 4 vorhandenen Schwebepartikel 19 bestimmt und über die Steuereinrichtung die Menge der Schwebepartikel 19 um einen vorgegebenen Sollwert eng schwankend steuert.

Der vermessene Rohrabschnitt 1 wird mit auf ihm angelagerten Schwebepartikeln 19 aus der Aufnahme 4 mittels des Tragarmes herausgenommen und für den Fall, dass der Rohrabschnitt 1 als hinreichend genau abgelängt befunden wird, zum Weitertransport verladen und andernfalls aussortiert. Durch die Weiterbeförderung der Rohrabschnitte 1 und den Transport entladen sich die Rohrabschnitte 1 ohne zutun, und die Staubpartikel 19 fallen von selbst wieder ab.

### Bezugszeichenliste

- 1: Rohrabschnitt
- 2: Rohrabschnittsende
- 4: Aufnahme
- 5: -
- 6: elektrischer Kontakt
- 7: elektrische Ladungsquelle
- 8: Metallbeschichtung
- 9: Laser
- 10: -
- 11: Sensor
- 12: Lasersensor
- 13: Linienprofil
- 14: Laserfächer
- 15: -
- 16: einfallender Laserstrahl
- 17: Streulicht
- 18: reflektierter Laserstrahl
- 19: Schwebepartikel
- 20: -
- 21: Schwebepartikelzufuhr
- L: Längsrichtung

## Patentansprüche

1. Messverfahren für ein Profil einer reflektierenden Fläche eines metallischen Rohrabschnittsendes (2), indem ein Rohrabschnitt (1) in einer Aufnahme (4) einer Messvorrichtung aufgenommen wird, die an ihrer Innenseite mit einer Metallbeschichtung (8) belegt ist,
mit der der eingelegte Rohrabschnitt (1) beim Bestücken der Aufnahme automatisch in Berührung kommt, und indem
die Metallbeschichtung (8) über einen mit ihr in Verbindung stehenden elektrischen Kontakt (6) elektrisch aufgeladen wird und das Rohrabschnittsende (2) auflädt, so dass ein elektrisches Feld zwischen in der Umgebungsluft der Fläche schwebenden Schwebepartlkeln (19) und der Fläche erzeugt wird, durch das die Partikel (19) zu der Fläche angezogen werden und die Fläche, indem sie sich auf ihr ablagern, mattieren und die mattierte Fläche danach mit einem Laserstrahl (16) abgetastet wird und
von der mattierten Fläche reflektiertes Streulicht (17) mit einem Sensor (11) gemessen wird und damit das Profil der Fläche bestimmt wird und der Rohrabschnitt (1) nach der Profilmessung aus der Messvorrichtung entfernt wird sich entlädt, und die Schwebepartikel (19) von selbst wieder abfallen.

2. Messverfahren nach Anspruch 1,
**dadurch gekennzeichnet, dass** die Partikel (19) elektrostatisch aufgeladen werden.

3. Messverfahren nach Anspruch 1 oder 2,
**dadurch gekennzeichnet, dass** die Fläche elektrostatisch aufgeladen wird.

4. Messverfahren nach Anspruch 1,
**dadurch gekennzeichnet, dass** Schwebepartikel (19) über eine Partikelzufuhr (21) der Umgebung im Bereich der Fläche zugeführt werden.

5. Messverfahren nach Anspruch 1,
**dadurch gekennzeichnet, dass** der Rohrabschnitt (1) in einer Messvorrichtung aufgenommen wird und nach der Profilmessung aus der Messvorrichtung entfernt wird.

6. Messverfahren nach wenigstens einem der vorstehenden Ansprüche,
**dadurch gekennzeichnet, dass** der Rohrabschnitt (1) von einem Profilmaterial abgelängt wird und dann in der Messvorrichtung aufgenommen wird.

7. Messverfahren nach Anspruch 6,
**dadurch gekennzeichnet, dass** das Werkstück nach weniger als 20 s nach dem Ablängen vermessen wird.

8. Messvorrichtung zur Durchführung eines Verfahrens der Ansprüche 1 bis 7, mit Schwebepartikeln (t9) und mit einer Aufnahme (4) für einen Rohrabchnitt (1) mit einer reflektierenden Fläche, deren Profil bestimmt werden soll, wobei die Aufnahme (4) an ihrer Innenseite mit einer Metallbeschichtung (8) belegt ist, mit der der eingelegte Rohrabschnitt (1) beim Bestücken der Aufnahme (4) automatisch in Berührung kommt und wobei die Metallbeschichtung (8) mit einem Ende eines elektrischen Kontakts (6) verbunden ist, dessen anderes Ende mit einer elektrischen Aufladeeinrichtung (7) elektrisch verbunden ist so dass das Rohrabschnittsende (2) aufladbar ist und ein elektrisches Feld zwischen den in der Umgebungsluft der Fläche schwebenden Schwebepartikeln (19) und der Fläche erzeugbar ist, durch das die Partikel (19) zu der Fläche angezogen werden, sich dort ablagern und die Fläche mattieren, einem Laser (9) mit einem die mattierte Fläche abtastenden Laserstrahl (16) und mit einem von der mattierten Fläche reflektiertes Streulicht (17) messenden Sensor (11), **dadurch gekennzeichnet, dass** die Schwebepartikel (19) derart beschaffen sind, dass sie vom Rohrabschnittsende (2) von selbst wieder abfallen, nachdem der Rohrabschnitt (1) nach der Profilmessung aus der Messvorrichtung entfernt und entladen ist.

9. Messvorrichtung nach Anspruch 8,
**gekennzeichnet durch** einen bei der Aufnahme (4) angeordneten elektrischen Kontakt (6), der mit dem aufgenommenen Werkstück automatisch in Kontakt kommt.

10. Messvorrichtung nach Anspruch 9,
**gekennzeichnet durch** eine Partikelzufuhreinrichtung (21).

11. Messvorrichtung nach Anspruch 10,
**dadurch gekennzeichnet, dass** die Aufladeelnrichtung (7) an der Partikelzufuhreinrichtung (21) vorgesehen ist.

## Claims

1. A method of measuring a profile of a reflecting surface of an end of a metallic pipe section (2), in that a pipe section (1) is received in a receptacle (4) of a measuring device which is plated at its internal side with a metallic cover (8) the situated pipe section (1) is getting automatically into contact with while loading the receptacle (4) and in that
the metallic cover (8) is charged electrically by an electrical contact (6) connected to it and charging the end of the pipe section (2) so that an electrical field is generated between suspended particles (19) suspending in the ambient air of the surface and the surface by which the particles (19) are attracted to the surface and mattingfinishing the surface by depositing on it and afterwards the mattfinished surface is scanned by a laser beam (16) and scattered light (17) reflected by the mattfinished surface is measured by a sensor (11) and in this way the profile of the surface is determined and the pipe section (1) is removed from the measuring device after the measuring of the profile and discharges and the suspended particles (19) drop off by themselves.

2. A measurement method according to claim 1, **characterized in that** the particles (19) are charged electrostatically.

3. A measurement method according to claim 1 or 2, **characterized in that** the surface is charged electrostatically.

4. A measurement method according to claim 1, **characterized in that** suspended particles (19) are supplied to the environment in the region of the surface by way of a particle-supply means (21).

5. A measurement method according to claim 1, **characterized in that** the pipe section is received in a measuring device and is removed from the measuring device after the profile has been measured.

6. A measurement method according to at least one of the preceding claims, **characterized in that** the pipe section is cut into lengths from a profiled material and is then received in the measuring device.

7. A measurement method according to claim 6, **characterized in that** the pipe section is measured less than 20 seconds after being cut into lengths.

8. A measuring device for performing a method according to claims 1 to 7, with suspended particles (19) and with a receptacle (4) for a pipe section (1) with a reflecting surface, the profile of which is to be determined, whereby the receptacle (4) is plated at its internal side with a metallic cover (8) which the inserted pipe section (1) is getting automatically into contact with while loading the receptacle (4) and whereby the metallic cover (8) is connected with one end of an electrical contact (6) the other end of which is connected electrically to a charging device (7) so that the end of the pipe section (2) is capable of being charged, an electrical field is capable of being generated between the surface and suspended particles (19) suspending in the ambient air of the surface, whereby the particles (19) being attracted to the surface, depositing there and matt-finishing the surface, a laser (9) with a laser beam (16) scanning the matt-finished surface and with a sensor (11) measuring scattered light (17) reflected by the matt-finished surface, **characterized in that** the suspended particles (19) are provided in such a manner that they drop off by themselves from the end of the pipe section (2) after the pipe section (1) is removed and discharged after the measuring of the profile

9. A measuring device according to claim 8, **characterized by** an electrical contact (6) which is arranged at the receptacle (4) and which automatically comes into contact with the workpiece received.

10. A measuring device according to claim 9, **characterized by** a particle-supply device (21).

11. A measuring device according to claim 10, **characterized in that** the charging device (7) is provided on the particle-supply device (21).

## Revendications

1. Procédé de mesure pour un profil d'une surface réfléchissante d'une extrémité d'une section de tuyau métallique (2), une section de tuyau (1) étant logée dans un logement (4) d'un dispositif de mesure qui est revêtu sur son côté intérieur d'un revêtement métallique (8) avec lequel la section de tuyau insérée (1) vient automatiquement en contact lors de l'insertion dans le logement et le revêtement métallique (8) étant chargé électriquement par un contact électrique (6) qui lui est connecté et chargeant l'extrémité de la section de tuyau (2) si bien qu'un champ électrique est généré entre des particules en suspension (19), qui se trouvent en suspension dans l'air ambiant de la surface, et la surface, champ électrique par lequel les particules (19) sont attirées vers la surface et dépolissent la surface en se déposant sur celle-ci et la surface dépolie est ensuite balayée avec un faisceau laser (16) et de la lumière dispersée (17) qui est réfléchie par la surface dépolie est mesurée avec un capteur (11) et pour que le profil de la surface soit défini et la section de tuyau (1) soit enlevée du dispositif de mesure après la mesure du profil, se décharge et que les particules en suspension (19) retombent d'elles-mêmes.

2. Procédé de mesure selon la revendication 1,
**caractérisé en ce que** les particules (19) sont chargées de manière électrostatique.

3. Procédé de mesure selon la revendication 1 ou 2,
**caractérisé en ce que** la surface est chargée de manière électrostatique.

4. Procédé de mesure selon la revendication 1,
**caractérisé en ce que** des particules en suspension (19) sont amenées par une alimentation en particules (21) à l'environnement dans la zone de la surface.

5. Procédé de mesure selon la revendication 1,
**caractérisé en ce que** la section de tuyau (1) est logée dans un dispositif de mesure et est enlevée du dispositif de mesure après la mesure du profil.

6. Procédé de mesure selon au moins l'une des revendications précédentes,
**caractérisé en ce que** la section de tuyau (1) est découpée d'un matériau de profil et est ensuite logée dans le dispositif de mesure.

7. Procédé de mesure selon la revendication 6,
**caractérisé en ce que** la pièce à travailler est mesurée après moins de 20 s après avoir été découpée.

8. Dispositif de mesure pour exécuter un procédé selon les revendications 1 à 7, avec des particules en suspension (19) et avec un logement (4) pour une section de tuyau (1) avec une surface réfléchissante dont le profil doit être défini, le logement (4) étant revêtu sur son côté intérieur d'un revêtement métallique (8) avec lequel la section de tuyau insérée (1) vient automatiquement en contact lors de l'insertion dans le logement et le revêtement métallique (8) étant relié à une extrémité d'un contact électrique (6) dont l'autre extrémité est reliée électriquement à un dispositif de mise en charge électrique (7) si bien que l'extrémité de la section de tuyau (2) puisse être chargée et qu'un champ électrique puisse être généré entre les particules en suspension (19) qui sont en suspension dans l'air ambiant de la surface et la surface, champ électrique par lequel les particules (19) sont attirées vers la surface, s'y déposent et dépolissent la surface, et avec un laser (9) avec un faisceau laser (16) qui balaie la surface dépolie et avec un capteur (11) qui mesure de la lumière dispersée (17) qui est réfléchie par la surface dépolie,
**caractérisé en ce que** les particules en suspension (19) sont structurées de telle manière qu'elles retombent d'elles-mêmes de l'extrémité de la section de tuyau après que la section de tuyau (1) ait été enlevée du dispositif de mesure après la mesure du profil et déchargée.

9. Dispositif de mesure selon la revendication 8,
**caractérisé par** un contact électrique (6), placé près du logement (4), qui entre automatiquement en contact avec la pièce à travailler qui y est logée.

10. Dispositif de mesure selon la revendication 9,
**caractérisé par** un dispositif d'alimentation en particules (21).

11. Dispositif de mesure selon la revendication 10,
**caractérisé en ce que** le dispositif de mise en charge (7) est prévu sur le dispositif d'alimentation en particules (21).
